# EUROPÄISCHE PATENTSCHRIFT

(11) **EP 3 867 038 B1**
(45) Veröffentlichungstag und Bekanntmachung des Hinweises auf die Patenterteilung: **10.01.2024**
(21) Anmeldenummer: 19789951.1
(22) Anmeldetag: 16.10.2019
(51) Int. Cl.: B29C 48/13, B29C 48/30, B29C 48/25, B29C 48/92, B29C 49/00, B29D 23/18

(54) **KORRUGATOR UND VERFAHREN ZUM VERÄNDERN EINES KORRUGATORS**
CORRUGATOR AND METHOD FOR VARYING A CORRUGATOR
MACHINE À ONDULER ET PROCÉDÉ POUR LA MODIFICATION D'UNE MACHINE À ONDULER

(30) Priorität: 17.10.2018 DE 102018217798
(43) Veröffentlichungstag der Anmeldung: 25.08.2021
(73) Patentinhaber: Fränkische Industrial Pipes GmbH & Co. KG, 97486 Königsberg (DE)
(72) Erfinder: HENNINGER, Gerhard, 97437 Haßfurt- Wülflingen (DE); ANKENBRAND, Stefan, 97478 Knetzgau/Zell (DE); SCHUBERT, Andy, 97486 Königsberg/Unfinden (DE); BAUMEISTER, Florian, 97461 Hofheim/Eichelsdorf (DE); SPERANDIO, Frank, 97486 Königsberg (DE); HÖLZER, Willi, 97486 Königsberg/Hellingen (DE); SPIELBERG, Daniel Ewald, 90480 Nürnberg (DE)
(74) Vertreter: Weickmann & Weickmann PartmbB
(86) Internationale Anmeldenummer: PCT/EP2019/078039
(87) Internationale Veröffentlichungsnummer: WO 2020/079046

(56) Entgegenhaltungen:
- WO-A1-2004/045828
- CN-A- 103 057 086
- DE-A1-102014 226 335
- DE-C1- 10 148 294
- US-A- 4 325 685
- US-A1- 2002 025 355

## Beschreibung

Die Erfindung betrifft einen Korrugator nach dem Oberbegriff des Anspruchs 1.

Korrugatoren werden beispielsweise zur Herstellung von Wellrohren verwendet. Dabei wird zum Beispiel ein Kunststoffmaterial in den Korrugator eingeführt und durch Über- und/oder Unterdruck dazu gebracht, sich an Formungsflächen anzulegen, welche an Formbackeneinheiten des Korrugators gebildet sind, um so das Wellrohr zu bilden. Üblicherweise umfasst der Korrugator dabei eine Mehrzahl an Formbackeneinheiten, welche die Formungsflächen aufweisen. Die Formbackeneinheiten bewegen sich dabei typischerweise am Korrugator in einer umlaufenden Weise, so dass je nach Umlaufgeschwindigkeit, Anzahl und Größe der Formbackeneinheiten, ein und dieselbe Formbackeneinheit nach einer vorbestimmten Zeit eine definierte Position am Korrugator wiederholt passiert.

Ein Korrugator ist beispielsweise aus der US 4 325 685 A bekannt, welche als nächstliegender Stand der Technik erachtet wird. Der Korrugator weist eine Mehrzahl von Formbackeneinheiten auf, umfassend ein Formbackenbasiselement und einen Formbackenaufsatz, wobei der Formbackenaufsatz mit einer Mehrzahl von Formungsflächen ausgebildet ist. Über die Formungsflächen ist der Korrugator dazu in der Lage, Wellrohre mit glatten oder gewellten Abschnitten zu erzeugen.

Darüber hinaus seien die Dokumente US 2002/025355 A1, DE 10 2014 226 335 A1, WO 2004/045828 A1, CN 103 057 086 und DE 101 48 294 C1 erwähnt.

Möchte man nun Wellrohre mit einheitlichem Durchmesser, aber unterschiedlichen Längen herstellen, so kann der Korrugator derart mit Formbackeneinheiten bestückt werden, dass alle Formungsflächen der Formbackeneinheiten zueinander identisch sind. Auf diese Weise kann ein endloses Wellrohr mit einheitlichem Durchmesser hergestellt werden. In einem nachgelagerten Verarbeitungsschritt kann dieses endlose Wellrohr dann auf gewünschte Längen zugeschnitten werden.

Möchte man hingegen Wellrohre herstellen, welche einen über ihre Länge variablen Durchmesser, zum Beispiel einen Bereich mit einem im Vergleich zum restlichen Wellrohr vergrößerten Durchmesser, aufweisen, so kann der Korrugator mit Formbackeneinheiten bestückt werden, welche eine Herstellung von Wellrohrabschnitten mit kleinem Durchmesser, eine Herstellung von Wellrohrabschnitten mit ansteigendem Durchmesser, eine Herstellung von Wellrohrabschnitten mit großem Durchmesser und eine Herstellung von Wellrohrabschnitten mit abnehmendem Durchmesser erlauben. Allerdings kann so systembedingt, das heißt aufgrund der Funktionsweise des Korrugators, nur ein endloses Wellrohr hergestellt werden, bei welchem der vergrößerte Durchmesser in einer gleichbleibenden periodischen Abfolge auftritt. Sind beispielsweise Wellrohre gewünscht, welche genau einen Abschnitt mit vergrößertem Durchmesser aufweisen, so können diese nur in einer einzigen Länge hergestellt werden, ohne größeren Materialverschnitt zu erzeugen.

Möchte man aber voneinander unterschiedliche Wellrohre herstellen, welche zum Beispiel eine voneinander abweichende Anzahl an Abschnitten mit vergrößertem Durchmesser, aber eine zueinander gleiche Gesamtlänge, aufweisen, so ist die Bestückung des Korrugators für jedes Wellrohr aufwendig neu zu konfigurieren.

Aufgrund dieses hohen Zeit- und Kostenaufwands zur Umbestückung eines Korrugators, sind kleine Serien oder sogar Einzelanfertigungen von spezifischen Wellrohren oft nicht realisierbar.

Es ist daher die Aufgabe der vorliegenden Erfindung, einen Korrugator bereitzustellen, welcher es ermöglicht, ein Design eines herzustellenden Wellrohrs flexibel anzupassen und dabei die Rüstkosten des Korrugators zu reduzieren.

Diese Aufgabe wird in einem ersten Aspekt durch einen Korrugator nach Anspruch 1 gelöst.

Dadurch, dass der die mehreren Formungsflächen aufweisende Formbackenaufsatz relativ zu dem Formbackenbasiselement, welches am Korrugator gehaltert ist, verlagerbar ist, kann eine Ausbildung eines herzustellenden Wellrohrs verändert werden, ohne dass es notwendig ist, eine entsprechende Formbackeneinheit auszutauschen, d.h. eine gesamte Formbackeneinheit aus dem Korrugator zu entnehmen, wie es bei einstückig ausgebildeten Formbackeneinheiten des Stands der Technik üblich ist. Insbesondere bei dem eingangs beschriebenen Beispiel eines Wellrohrs, welches einen Abschnitt mit vergrößertem Durchmesser umfasst, weist ein jeweiliger Formbackenaufsatz vier Formungsflächen auf, nämlich eine Formungsfläche für einen Wellrohrabschnitt mit einem ersten Durchmesser, eine Formungsfläche für einen Wellrohrabschnitt mit einem ansteigenden Durchmesser, eine Formungsfläche für einen Wellrohrabschnitt mit einem abnehmenden Durchmesser und eine Formungsfläche für einen Wellrohrabschnitt mit einem zweiten Durchmesser, welcher größer als der erste Durchmesser ist.

Je nachdem, wie das herzustellende Wellrohr durch eine jeweilige Formbackeneinheit ausgebildet werden soll, kann der Formbackenaufsatz relativ zu dem Formbackenbasiselement derart verlagert werden, dass die entsprechende Formungsfläche Teil der Herstellungskette des Wellrohrs wird, das heißt mit dem Material, aus welchem das Wellrohr gebildet wird, in Kontakt tritt.

Natürlich kann der Formbackenaufsatz, anstelle der hier beschriebenen vier Formungsflächen, auch mehr Formungsflächen aufweisen, je nachdem welche Produktvielfalt über eine einzelne Formbackeneinheit abgedeckt werden soll.

In einer Weiterbildung der Erfindung kann der Formbackenaufsatz relativ zu dem Formbackenbasiselement entlang genau einer Achse translatorisch oder um genau eine Achse rotatorisch verlagerbar sein. In Bezug auf die erste Alternative kann dies beispielsweise dadurch realisiert werden, dass der Formbackenaufsatz mit dem Formbackenbasiselement über eine Gleit- und/oder Rollanordnung verbunden ist. Beispielsweise kann der Formbackenaufsatz über eine Schwalbenschwanzverbindung mit dem Formbackenbasiselement verbunden sein, so dass der Formbackenaufsatz relativ zu dem Formbackenbasiselement nur entlang der Schwalbenschwanzverbindung vor und zurück verlagerbar sein kann (diese Richtung kann auch als "Formungsflächenverlagerungsrichtung" bezeichnet werden).

Der relativen Verlagerung zwischen Formbackenaufsatz und Formbackenbasiselement kann dabei eine Arretierungsvorrichtung, wie beispielsweise eine Rastvorrichtung, zugeordnet sein, wobei insbesondere eine gleiche Anzahl an Rastpositionen wie an Formungsflächen vorgesehen sein kann. Insbesondere kann die Rastvorrichtung derart eingerichtet sein, dass jede jeweilige Mittelachse von einer jeweiligen Rastvorrichtung zugeordneten Formungsflächen beim in Eingriff treten der Rastvorrichtung derart, dass diese Formungsfläche Teil der oben erwähnten Herstellungskette wird, an einer gleichen Position relativ zu dem Formbackenbasiselement zu liegen kommt. Somit kann sichergestellt werden, dass eine Mittelachse eines herzustellenden Wellrohrs auch nach einem Wechsel der Formbackeneinheit auf eine andere Formungsfläche ohne wesentlichen Versatz weiter verläuft.

Dabei kann die Mehrzahl von Formungsflächen an dem Formbackenaufsatz an derselben Fläche angeordnet sein. Weist der Formbackenaufsatz beispielsweise an seiner der Gleit- und/oder Rollanordnung entgegengesetzten Seite eine ebene Fläche auf, so können die Formungsflächen alle an dieser ebenen Fläche angeordnet sein. Insbesondere können die Formungsflächen in der Richtung aufeinanderfolgend sein, in welcher der Formbackenaufsatz relativ zu dem Formbackenbasiselement verlagerbar ist. Außerdem kann jede der voranstehend erwähnten Mittelachsen von jeweiligen Formungsflächen zu dieser Verlagerungsrichtung des Formbackenaufsatzes relativ zu dem Formbackenbasiselement orthogonal sein.

Vorteilhafterweise kann sich die Fläche zu der Verlagerungsrichtung des Formbackenaufsatzes relativ zu dem Formbackenbasiselement im Wesentlichen parallel erstrecken, so dass eine Tiefenerstreckung einer jeweiligen Formbackeneinheit von der die Formungsflächen aufweisenden Fläche zu einem entgegengesetzten Ende der Formbackeneinheit unabhängig von der Positionierung des Formbackenaufsatzes relativ zu dem Formbackenbasiselement konstant bleiben kann.

In Bezug auf die weiter oben erwähnte zweite Alternative kann dies beispielsweise dadurch realisiert werden, dass der Formbackenaufsatz an dem Formbackenbasiselement drehbar gelagert ist.

Dabei kann der Formbackenaufsatz einen polygonen Querschnitt aufweisen und jede der Mehrzahl von Formungsflächen kann an einer unterschiedlichen Fläche des polygonen Formbackenaufsatzes angeordnet sein. Vorteilhafterweise kann ein Polygon ausgewählt werden, welches so viele Seiten aufweist wie voneinander unterschiedliche Formungsflächen vorgesehen sind. Für das eingangs erwähnte Beispiel von vier zueinander unterschiedlichen Formungsflächen könnte sich daher ein Formbackenaufsatz mit quadratischem Querschnitt ergeben. Je nach gewünschter Ausbildung des herzustellenden Wellrohrs kann der Formbackenaufsatz derart rotiert werden, dass die entsprechende Formungsfläche zu dem Abschnitt des Korrugators weist, an welchem das Wellrohr gebildet wird.

Vorzugsweise können Formbackenaufsätze von Formbackeneinheiten, welche Teile einer Form bilden, welche eine Gestalt eines herzustellenden Wellrohrs definiert, zueinander identisch ausgebildet sein. Somit können diese beiden Formbackenaufsätze, welche an einer vordefinierten Stelle des Korrugators gegeneinander anliegen, um die oben erwähnte Form zu bilden, in der gleichen Richtung und um den gleichen Betrag verlagert werden, um wieder zueinander passende Halbformen aufzuweisen, welche mit dem Material des herzustellenden Wellrohrs in Kontakt treten können.

In einer Weiterbildung der vorliegenden Erfindung kann der Formbackenträger als eine Kette oder als eine Führungseinrichtung ausgebildet sein. Insbesondere können die Formbackeneinheiten mit dem Formbackenträger in einer lösbaren Weise verbunden sein. Die am Formbackenträger gehalterten Formbackeneinheiten können durch den Formbackenträger betriebsmäßig an dem Korrugator entlang einer, beispielsweise horizontalen, Förderrichtung verlagerbar gelagert sein. Im Fall des als Kette ausgebildeten Formbackenträgers können die Formbackeneinheiten über ihren gesamten Umlauf am Korrugator aktiv durch den Formbackenträger verlagert werden, das heißt in jeder Position einer jeweiligen Formbackeneinheit am Korrugator kann eine antreibende Kraft durch den Formbackenträger auf eine jeweilige Formbackeneinheit einwirken, welche die Formbackeneinheit am Korrugator verlagern kann. Im Fall des als Führungseinrichtung ausgebildeten Formbackenträgers können die Formbackeneinheiten nur abschnittsweise angetrieben sein. Beispielsweise können die Formbackeneinheiten mit dem als Führungsschiene ausgebildeten Formbackenträger derart in Eingriff stehen, dass sie lediglich entlang einer Achse der Führungsschiene verlagerbar sind. Dabei können die Formbackeneinheiten, insbesondere zumindest in dem Bereich des Korrugators, in welchem die Formbackeneinheiten gegen jeweilige komplementäre Formbackeneinheiten anliegen, um eine Form für das herzustellenden Wellrohr zu bilden, lediglich passiv angetrieben sein. Das heißt, ein Antrieb der Formbackeneinheiten entlang des Formbackenträgers kann an einem von dem Bereich der Herstellung des Wellrohrs verschiedenen Abschnitt des Korrugators, beispielsweise an den Längsenden des Korrugators bzw. an den Längsendendes Bereichs, an welchem das Wellrohr hergestellt wird, angeordnet sein. Die durch diesen Abschnitt angetriebenen Formbackeneinheiten treten mit jeweiligen benachbarten, nicht angetriebenen, Formbackeneinheiten in seitlichen Kontakt und schieben diese durch den Formbackenträger. Somit kann gewährleistet werden, dass zumindest in dem Bereich, in welchem die Formbackeneinheiten passiv weiter geschoben werden, kein oder zumindest ein für die Herstellung des Wellrohrs vernachlässigbarer Spalt zwischen seitlich benachbarten Formbackeneinheiten vorliegt.

Diese Richtung, entlang welcher die Formbackeneinheiten während der Produktion eines Wellrohrs verlagert werden bzw. in welcher das Wellrohr hergestellt wird, kann auch als "Produktionsrichtung" bezeichnet werden.

Vorteilhafterweise kann der Formbackenaufsatz relativ zu dem Formbackenbasiselement im Betriebszustand der Formbackeneinheit entlang einer zu einer Produktionsrichtung des Korrugators im Wesentlichen orthogonalen Richtung verlagerbar oder um eine zu der Produktionsrichtung des Korrugators im Wesentlichen parallele Achse rotierbar sein. Aus dem Stand der Technik sind sowohl Korrugatoren bekannt, welche eine horizontale Produktionsrichtung aufweisen, als auch Korrugatoren, welche eine vertikale Produktionsrichtung aufweisen. Demgemäß kann eine translatorische Verlagerungsrichtung eines Formbackenaufsatzes bei einem Korrugator mit einer horizontalen Produktionsrichtung vertikal sein und bei einem Korrugator mit einer vertikalen Produktionsrichtung horizontal sein. Eine Rotationsachse eines Formbackenaufsatzes relativ zu einem Formbackenbasiselement kann bei einem Korrugator mit horizontaler Produktionsrichtung ebenfalls horizontal, insbesondere zu der Produktionsrichtung parallel, ausgerichtet sein. Natürlich ist jedoch auch eine rechtwinklige Ausrichtung der Rotationsachse zu der Produktionsrichtung denkbar. Auch kann die Rotationsachse orthogonal, das heißt bei einem Korrugator mit horizontaler Produktionsrichtung vertikal, ausgerichtet sein. Analoges gilt hier für einen Korrugator mit einer vertikalen Produktionsrichtung.

Der Korrugator kann eine Verstelleinrichtung umfassen, welche dazu eingerichtet ist, den Formbackenaufsatz relativ zu dem Formbackenbasiselement um ein vorbestimmtes Ausmaß zu verlagern. Je nach Ausbildung der Formbackeneinheit bzw. der Art der Verlagerung des Formbackenaufsatzes relativ zu dem Formbackenbasiselement kann die Verstelleinrichtung einen jeweiligen Formbackenaufsatz relativ zu dem Formbackenbasiselement verlagern oder rotieren. Wie bereits mit Bezug auf die Formbackeneinheit beschrieben, kann eine Rastvorrichtung vorgesehen sein, welche wenigstens eine Position des Formbackenaufsatzes relativ zu dem Formbackenbasiselement definiert bzw. mit einer definierten Haltekraft hält.

Die Verstelleinrichtung kann als wenigstens ein verlagerbarer Anschlag ausgebildet sein, mit welchem ein Abschnitt des Formbackenaufsatzes in Kontakt tritt, so dass der Formbackenaufsatz relativ zu dem Formbackenbasiselement entsprechend der voreingestellten Position des Anschlags verlagert wird. Beispielsweise kann dieser Anschlag in der Verlagerungsrichtung des Formbackenaufsatzes bzw. der Formungsflächen verlagerbar sein. Ferner kann der Anschlag dazu eingerichtet sein, schrittweise derart verlagerbar zu sein, dass jeder Schritt einer vorbestimmten, beispielsweise mit einer definierten Position der Rastvorrichtung zusammenfallenden, Position des Formbackenaufsatzes relativ zu dem Formbackenbasiselement entspricht. Der Anschlag kann dabei mit einem jeweiligen Formbackenaufsatz derart zusammenwirken, dass eine Verlagerung einer jeweiligen Formbackeneinheit am Formbackenträger quer zu dem Anschlag ein Abgleiten des jeweiligen Formbackenaufsatzes an dem Anschlag und damit die Verlagerung des Formbackenaufsatzes bis zu der vorbestimmten Position hervorruft.

Alternativ oder zusätzlich kann es vorgesehen sein, dass die Verstelleinrichtung dazu eingerichtet sein kann, über eine vordefinierte Strecke zusammen mit wenigstens einer zu verstellenden Formbackeneinheit verlagert zu werden, so dass beispielsweise während der gemeinsamen Verlagerung keine Relativbewegung zwischen Verstelleinrichtung und jeweiliger Formbackeneinheit stattfindet. Die Verstelleinrichtung kann dabei dazu eingerichtet sein, einen jeweiligen Formbackenaufsatz relativ zu dem Formbackenbasiselement in einer gewünschten Weise zu verlagern. Nach dieser Verlagerung kann die Verstelleinrichtung zu einem Beginn der vordefinierten Strecke, über welche die Verstelleinrichtung zusammen mit einer jeweiligen Formbackeneinheit verlagert wird, zurückkehren, um so beispielsweise wenigstens eine nachfolgende Formbackeneinheit einzustellen.

Die Verstelleinrichtung kann dabei als eine Mehrzahl von Verstelleinheiten ausgebildet sein, wobei jede Verstelleinheit einem Formbackenelement zugeordnet ist, und wobei jede Verstelleinheit dazu eingerichtet ist, den Formbackenaufsatz relativ zu dem Formbackenbasiselement zu verlagern. Insbesondere kann derart ein Zusammenspiel zwischen einer Anzahl von Verstelleinheiten der Verstelleinrichtung und der Strecke, über welche die Verstelleinrichtung zusammen mit zu verstellenden Formbackeneinheiten verlagert wird, gewählt werden, dass ein erster Satz von Formbackeneinheiten, welcher von der Verstelleinrichtung gleichzeitig verstellt werden kann, und ein zweiter Satz von Formbackeneinheiten, welcher direkt im Anschluss nach der Verstellung des ersten Satzes von Formbackeneinheiten gleichzeitig verstellt werden kann, direkt aufeinanderfolgend sind. Auf diese Weise kann die Verstelleinrichtung dazu eingerichtet sein, während eines einzigen Umlaufs der Formbackeneinheiten am Korrugator mit sämtlichen Formbackeneinheiten des Korrugators in Eingriff treten zu können, welche dieser Verstelleinrichtung zugeordnet sind.

In einer vorteilhaften Ausführungsform der vorliegenden Erfindung können zwei miteinander eine Form bildende Formbackenaufsätze mit Vorsprüngen und Ausnehmungen versehen sein, welche dazu eingerichtet sind, miteinander in Eingriff zu treten, wenn die Formbackenaufsätze betriebsmäßig gegeneinander anliegen. Zum einen kann dadurch gewährleistet werden, dass kleine Ausrichtungsungenauigkeiten zwischen zwei eine Form für einen Abschnitt des herzustellenden Wellrohrs bildende Formungsflächen über einen Eingriff von jeweiligen Vorsprüngen und Ausnehmungen ausgeglichen werden können. Zum anderen kann eine Verstelleinrichtung an einer Position des Korrugators vorgesehen sein, an welcher zwei sich gegenüberliegende Formbackenaufsätze bereits über ihre jeweiligen Vorsprüngen und Ausnehmungen miteinander in Eingriff getreten sind, so dass eine Verlagerung von einem der beiden Formbackenaufsätze eine Verlagerung des jeweiligen anderen Formbackenaufsatzes hervorruft. Somit kann beispielsweise eine einzige Verstelleinrichtung für den Korrugator ausreichend sein.

Alternativ oder zusätzlich können wenigstens zwei, in einer Produktionsrichtung des Korrugators gesehen, nacheinander, insbesondere an dem gleichen Formbackenträger, angeordnete Formbackenaufsätze mit Vorsprüngen und Ausnehmungen versehen sein, welche dazu eingerichtet sind, miteinander in Eingriff zu treten, wenn die Formbackenaufsätze betriebsmäßig aneinander anliegen. Das voranstehend Beschriebene für zwei sich gegenüberliegende Formbackenaufsätze ist hier analog für zwei nacheinander bzw. nebeneinander angeordnete Formbackenaufsätze anzuwenden. Es kann dadurch erreicht werden, dass über die Verlagerung eines einzigen Formbackenaufsatzes, oder zumindest einer geringen Anzahl von Formbackenaufsätzen, eine vergleichsweise größere Anzahl von Formbackenaufsätzen gleichzeitig relativ zu jeweiligen Formbackenbasiselementen verlagert werden kann. Dies kann insbesondere vorteilhaft sein, wenn eine derartige "Kette" an Formbackeneinheiten bzw. an Formungsflächen von Formbackenaufsätzen nicht nur in dem Verlauf der Formungsflächen, welche zu der Ausbildung des Wellrohrs beitragen, eine vordefinierte Abfolge an Formungsflächen für ein gewünschtes Wellrohr aufweisen, sondern auch eine Reihe von aufeinanderfolgenden und zueinander passenden Formungsflächen aufweisen, welche an jeweiligen Formbackenaufsätzen über oder unter den Formungsflächen angeordnet sind, welche gerade zu der Ausbildung des Wellrohrs beitragen.

Dies soll anhand eines Beispiels verdeutlicht werden. Wird beispielsweise ein Wellrohr mit konstantem Durchmesser in einer endlosen Weise hergestellt, so kann das bedeuten, dass alle Formungsflächen, welche an der Herstellung des Wellrohrs beteiligt sind, einen gleichen Durchmesser aufweisen bzw. zueinander identisch sind. Ist es nun erwünscht, zu einem beliebigen Zeitpunkt während der Herstellung des endlosen Wellrohrs einen Abschnitt mit vergrößertem Durchmesser vorzusehen, so kann eine Kette von seitlich miteinander in Eingriff stehenden Formbackenaufsätzen derart verlagert werden, dass bislang an der Herstellung des Wellrohrs nicht beteiligte Formungsflächen dieser Formbackenaufsätze an die Stelle der bisher an der Herstellung des Wellrohrs beteiligten Formungsflächen treten. Beispielsweise kann diese Kette aus vier Formbackenaufsätzen bzw. Formungsflächen bestehen, wobei in gemäß der Herstellung des Wellrohrs chronologischer Abfolge eine erste Formungsfläche einen Wellrohrabschnitt mit steigendem Durchmesser definiert, eine zweite und dritte Formungsfläche einen jeweiligen Wellrohrabschnitt mit konstantem, vergrößerten Durchmesser definiert und eine vierte Formungsfläche einen Wellrohrabschnitt mit abnehmendem Durchmesser definiert. Nach der Herstellung des Wellrohrabschnitt mit vergrößertem Durchmesser kann die oben beschriebene Kette an Formbackenaufsätzen wieder aus der Reihe an beteiligten Formungsflächen heraus verlagert werden, so dass wieder ein endloses Wellrohr mit konstantem, im Vergleich zum Abschnitt mit vergrößertem Durchmesser kleinerem, Querschnitt hergestellt werden kann.

Dieser Vorgang kann natürlich nach Belieben wiederholt werden und/oder es können mehrere derartige "zuschaltbare" Ketten von Formbackenaufsätzen angeordnet werden, um sehr flexibel Wellrohre mit variierendem Durchmesser herstellen zu können.

Vorteilhafterweise kann ein derartiges "Zuschalten" einer entsprechenden Kette von Formbackenaufsätzen an einer Seite des Korrugators (und gegebenenfalls auch an einer gespiegelten entgegengesetzten Seite des Korrugators) stattfinden, an welcher die einer derartigen Kette an Formungsflächen zugeordneten Formbackenaufsätze nicht an einer Herstellung des Wellrohrs beteiligt sind.

Nachzutragen sei an dieser Stelle, dass mit dem Begriff "konstanter Durchmesser eines Wellrohrs" ausgedrückt werden soll, dass ein Durchmesser eines Wellrohrs ohne Berücksichtigung der durch die Wellentäler und Wellenberge der Wandung des Wellrohrs ergebenden Durchmesseränderungen über einen betrachteten Abschnitt konstant bleibt. Hierfür kann es irrelevant sein, ob nun der Innendurchmesser, der Außendurchmesser oder ein mittlerer Durchmesser der gewellten Wandung des Wellrohrs über den betrachteten Abschnitt des Wellrohrs verwendet wird, solange die Wandstärke des Wellrohrs ebenfalls einheitlich bleibt. Analoges gilt natürlich für Abschnitte des Wellrohrs mit steigendem oder abnehmendem Durchmesser.

In einem zweiten Aspekt betrifft die vorliegende Erfindung ein Verfahren zum Verändern einer durch Formungsflächen definierten Form eines Korrugators, wobei das Verfahren die Schritte umfasst:
- Bereitstellen eines erfindungsgemäßen Korrugators, umfassend eine Mehrzahl von Formbacken, welche wenigstens eine Mehrzahl von Formbackeneinheiten umfasst, wobei jede Formbackeneinheit einen Formbackenaufsatz, welcher eine Mehrzahl von zueinander unterschiedlichen Formungsflächen aufweist, wobei die Formungsflächen dazu geeignet sind, einem zu formenden Material eine vorbestimmte Form zu verleihen, und

ein Formbackenbasiselement umfasst, an welchem der Formbackenaufsatz angeordnet ist, wobei der Formbackenaufsatz relativ zu dem Formbackenbasiselement an diesem verlagerbar gelagert ist, und
einen Formbackenträger, an welchem die Formbackenbasiselemente gehaltert sind
   - Antreiben der Formbackenbasiselemente, so dass sie sich entlang einer Förderrichtung bewegen,
   - Antreiben wenigstens eines Formbackenaufsatzes während seiner Bewegung in Förderrichtung durch eine Verstelleinrichtung relativ zu dem Formbackbasiselement, so dass der Formbackenaufsatz aus einer ersten Position, welche einer ersten Formungsfläche zugeordnet ist, in eine zweite Position, welche einer zweiten Formungsfläche zugeordnet ist, verlagert wird.

Es sei darauf hingewiesen, dass sämtliche zu dem erfindungsgemäßen Korrugator beschriebenen Merkmale und Vorteile auf das erfindungsgemäße Verfahren Anwendung finden und umgekehrt. Aus diesem Grund wird an dieser Stelle explizit auf die obige Beschreibung des erfindungsgemäßen Korrugators und gegebenenfalls auch der Formbackeneinheit in Bezug auf die Wirkungsweise und Vorteile des erfindungsgemäßen Verfahrens verwiesen.

Im Folgenden soll die Erfindung anhand von Ausführungsbeispielen in größerem Detail mit Bezug auf die begleitenden Zeichnungen beschrieben werden, in welchen
- Figur 1: eine perspektivische Ansicht einer ersten Ausführungsform einer Formbackeneinheit zeigt;
- Figur 2: eine Seitenansicht der Formbackeneinheit aus Figur 1 zeigt;
- Figur 3: eine perspektivische Ansicht einer zweiten Ausführungsform einer Formbackeneinheit zeigt;
- Figur 4: eine schematische Aufsicht auf einen erfindungsgemäßen Korrugator zeigt;
- Figur 5: eine Querschnittsansicht des erfindungsgemäßen Korrugators aus Figur 4 zeigt; und
- Figuren 6a bis 6d: einen schematischen Ablauf gemäß dem erfindungsgemäßen Verfahren zum Verändern einer durch Formungsflächen definierten Form eines Korrugators zeigen.

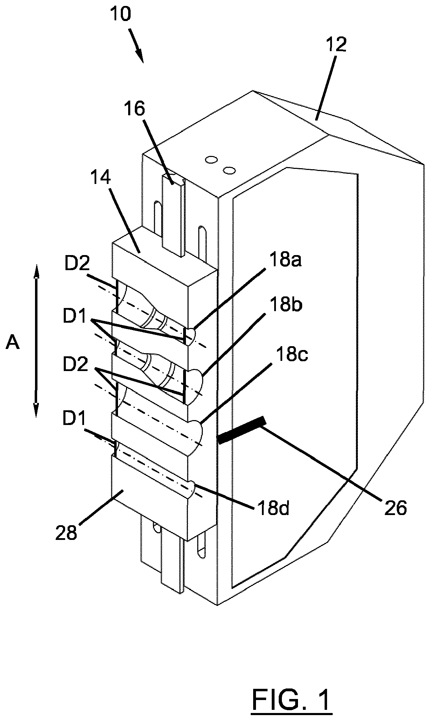

In Figur 1 ist eine Formbackeneinheit allgemein mit dem Bezugszeichen 10 versehen. Die Formbackeneinheit 10 umfasst ein Formbackenbasiselement 12 und einen Formbackenaufsatz 14. Der Formbackenaufsatz 14 ist an dem Formbackenbasiselement 12 derart gelagert, dass er nur entlang der Achse A verlagert werden kann. In dem in Figur 1 dargestellten Ausführungsbeispiel ist der Formbackenaufsatz 14 über eine Schwalbenschwanzverbindung 16 mit dem Formbackenbasiselement 12 verbunden.

Der Formbackenaufsatz 14 weist hier vier Formungsflächen 18a bis 18d auf, wobei die Formungsfläche 18a eine Hälfte einer Form für einen Abschnitt eines herzustellenden Wellrohrs definieren kann, in welchem das Wellrohr von einem größeren Außendurchmesser D2 auf einen kleineren Außendurchmesser D1 verjüngt wird. Dies ist natürlich abhängig davon, auf welcher Seite eines Korrugators diese Formbackeneinheit 10 verwendet wird und in welcher Richtung in Bezug auf die Herstellung eines Wellrohrs die Formbackeneinheit 10 angetrieben wird. So könnte die Formungsfläche 18a in einem anderen Anwendungsfall auch dazu eingerichtet sein, ein Wellrohr mit einem Außendurchmesser D1 auf einen größeren Außendurchmesser D2 aufzuweiten. In Bezug auf den ersten voranstehenden Anwendungsfall ist die Formungsfläche 18b des hier dargestellten Formbackenaufsatzes 14 dazu eingerichtet, eine Hälfte einer Form für einen Abschnitt eines Wellrohrs bereitzustellen, in welchem sich der Außendurchmesser des Wellrohrs von dem Außendurchmesser D1 zu dem größeren Außendurchmesser D2 hin aufweitet. Die Formungsfläche 18c bildet die Hälfte einer Form, welche dazu eingerichtet ist, einen Abschnitt eines Wellrohrs mit einem konstanten Außendurchmesser D2 zu bilden, und die Formungsfläche 18d bildet die Hälfte einer Form, welche dazu eingerichtet ist, einen Abschnitt eines Wellrohrs mit einem konstanten Außendurchmesser D1 zu bilden.

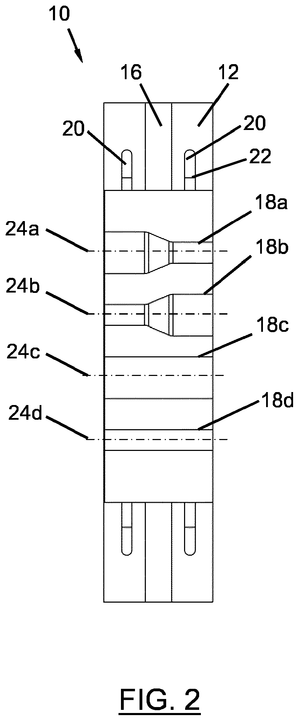

In der Seitenansicht von Figur 2 ist nochmals deutlich der Verlauf der Formungsflächen 18a bis 18d zu erkennen. Ferner ist zu erkennen, dass zu beiden Seiten der Schwalbenschwanzverbindung 16 Vertiefungen 20 in dem Formbackenbasiselement 12 angeordnet sind, in welchen beispielsweise eine Rastvorrichtung 22 angeordnet ist, welche dazu eingerichtet ist, den Formbackenaufsatz 14 an vordefinierten Positionen relativ zu dem Formbackenbasiselement 12 derart zu halten, dass eine Verlagerung des Formbackenaufsatzes 14 relativ zu dem Formbackenbasiselement 12 nur unter Überwindung einer vorbestimmten Haltekraft erlaubt ist.

Die Haltepositionen der Rastvorrichtung 22 bzw. des Formbackenaufsatzes 14 relativ zu dem Formbackenbasiselement 12 sind hier so angeordnet, dass bei jeder Halteposition, das heißt bei Eingreifen der Rastvorrichtung 22, eine entsprechende Mittelachse 24a bis 24d, welche jeweils einer jeweiligen Formungsfläche 18a bis 18d zugeordnet ist, an einer gleichen Position relativ zu dem Formbackenbasiselement 12 zu liegen kommt wie eine entsprechende Mittelachse 24a bis 24d einer Formungsfläche 18a bis 18d, welche zuvor bei eingegriffener Rastvorrichtung 22 an dieser Stelle zu liegen kam. Eine derartige Position ist in Figur 1 durch die Markierung 26 beispielhaft angezeigt, auf deren Höhe eine entsprechende Mittelachse 24a bis 24d bei eingerasteter Rastvorrichtung 22 angeordnet sein kann. Dies kann, zum Beispiel einer Höhe entsprechen, an welcher eine jeweilige der Formungsflächen 18a bis 18d an einer Herstellung eines Wellrohrs beteiligt sein kann.

Sämtliche Formungsflächen 18a bis 18d sind in der in den Figuren 1 und 2 dargestellten Ausführungsform an einer gemeinsamen ebenen Fläche 28 angeordnet, deren Haupterstreckungsrichtung parallel zu der Achse A verläuft.

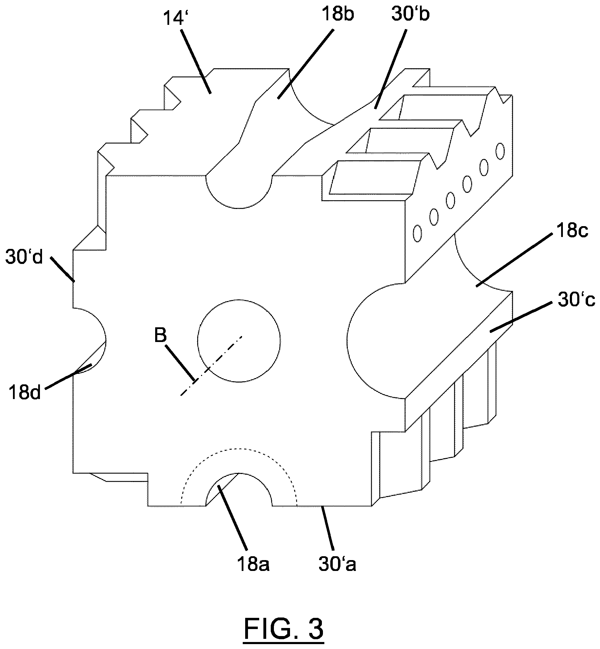

Figur 3 zeigt einen Formbackenaufsatz 14` einer zweiten Ausführungsform einer Formbackeneinheit.

So wie die Formbackeneinheit 10 der ersten Ausführungsform, auf deren Merkmale und Vorteile auch in Bezug auf die zweite Ausführungsform einer Formbackeneinheit gemäß Figur 3 explizit verwiesen sei, weist auch die zweite Ausführungsform des Formbackenaufsatzes 14` die vier Formungsflächen 18a bis 18d auf. Jede der Formungsflächen 18a bis 18d ist an einer separaten Fläche 30'a bis 30'd angeordnet. Gemäß der Anzahl an Formungsflächen 18a bis 18d sind hier vier voneinander getrennte Flächen 30'a bis 30'd vorgesehen, so dass der Formbackenaufsatz 14' einen im Wesentlichen quadratischen Querschnitt aufweist.

Der Formbackenaufsatz 14' ist mit einem nicht dargestellten Formbackenbasiselement derart verbunden, dass der Formbackenaufsatz 14' um eine Rotationsachse B relativ zu dem Formbackenbasiselement rotierbar ist. Entsprechend kann eine jeweilige Formungsfläche 18a bis 18d von dem Formbackenbasiselement wegweisen und kann mit einer komplementären Formungsfläche 18a bis 18d eines gegenüberliegenden Formbackenaufsatzes 14' zusammenwirken, um eine Form für ein herzustellendes Wellrohr zu bilden.

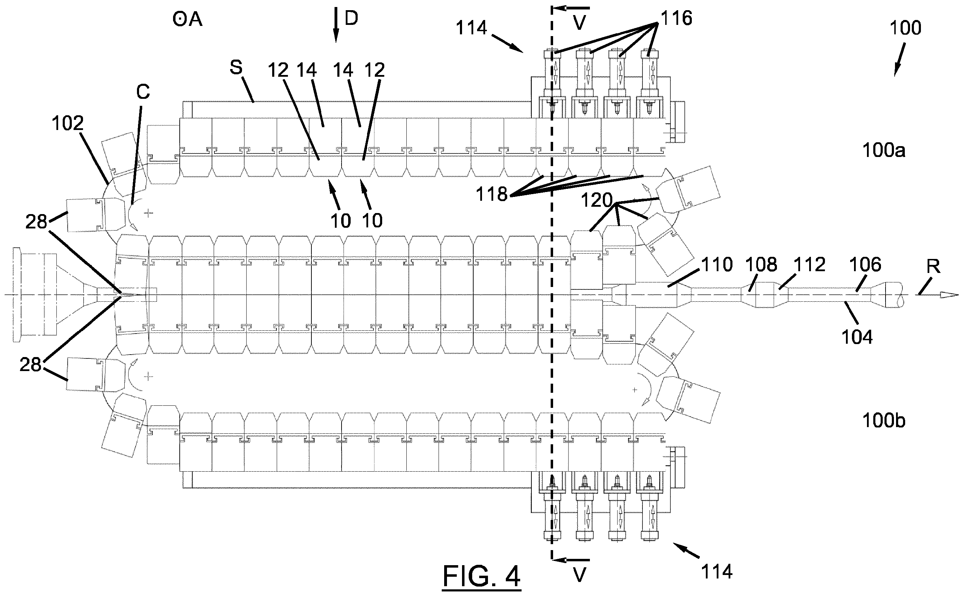

Figur 4 zeigt eine Aufsicht auf einen erfindungsgemäßen Korrugator, welcher allgemein mit dem Bezugszeichen 100 bezeichnet ist. Der Korrugator 100 umfasst hier eine Mehrzahl an Formbackeneinheiten 10, welche jeweils ein Formbackenbasiselement 12 und einen Formbackenaufsatz 14 aufweisen, wie mit Bezug auf Figuren 1 und 2 oben beschrieben worden ist.

Die Formbackenbasiselemente 12 sind mit einem Formbackenträger 102 verbunden, welcher die Formbackeneinheiten 10 an den beiden in Figur 4 links und rechts dargestellten Längsenden des Korrugators 100, beispielsweise über ein Zahnrad, derart entlang der durch die Pfeile C dargestellten Umlaufsrichtung antreibt, dass die sich an den Längsseiten des Korrugators 100 befindlichen Formbackeneinheiten 10, welche sich hier in einer Führungsschiene des Formbackenträgers 102 befinden können, von den durch den Formbackenträger 102 angetriebenen Formbackeneinheiten 10 vorwärts geschoben werden.

Natürlich gilt das für den in Figur 4 dargestellten oberen Teil 100a des Korrugators 100 Beschriebene in einer analogen Weise für den in Figur 4 unteren dargestellten Teil 100b des Korrugators 100.

Wie in der Mitte der Figur 4 zu erkennen ist, laufen Formbackeneinheiten 10 des oberen Teils 100a des Korrugators 100 und Formbackeneinheiten 10 des unteren Teils 100b des Korrugators 100 an einer in Figur 4 links dargestellten Seite aufeinander zu, bis deren Flächen 28 aneinander anliegen. Zueinander komplementäre Formungsflächen 18a bis 18d bilden an dieser Stelle eine Form, welche einen Abschnitt eines herzustellenden Wellrohrs 104 definiert. In diese Form wird nun beispielsweise ein Kunststoffmaterial eingebracht, welches durch Anlegen eines Unterdrucks an durch die Formungsflächen 18a bis 18d verlaufende Kanäle (nicht dargestellt) dazu gebracht wird, sich an die Kontur der Formungsflächen 18a bis 18d anzupassen. Gemäß der Wahl von zusammenwirkenden Formungsflächen 18a bis 18d wird ein Verlauf des Wellrohrs 104 entsprechend definiert.

Der Pfeil R in Figur 4 zeigt an, in welcher Richtung das produzierte Wellrohr 104 den Korrugator 100 verlässt (auch "Produktionsrichtung" genannt). Das Wellrohr 104 weist dabei Abschnitte 106 mit einem ersten Durchmesser D1, Abschnitte 108 mit einem von dem ersten Durchmesser D1 zu einem zweiten Durchmesser D2, welcher größer ist als der erste Durchmesser D1, zunehmenden Durchmesser, Abschnitte 110 mit einem konstanten Durchmesser D2 und Abschnitte 112 mit einem von dem Durchmesser D2 zu dem Durchmesser D1 abnehmendem Durchmesser auf. Wie bereits weiter oben ausgeführt, wird der Abschnitt 106 des Wellrohrs 104 durch zwei gegeneinander anliegende Formungsflächen 18d, der Abschnitt 108 des Wellrohrs 104 durch zwei gegeneinander anliegende Formungsflächen 18b, der Abschnitt 110 des Wellrohrs 104 durch zwei gegeneinander anliegende Formungsflächen 18c und der Abschnitt 112 des Wellrohrs 104 durch zwei gegeneinander anliegende Formungsflächen 18a gebildet, in welche entsprechendes Kunststoffmaterial eingebracht wird.

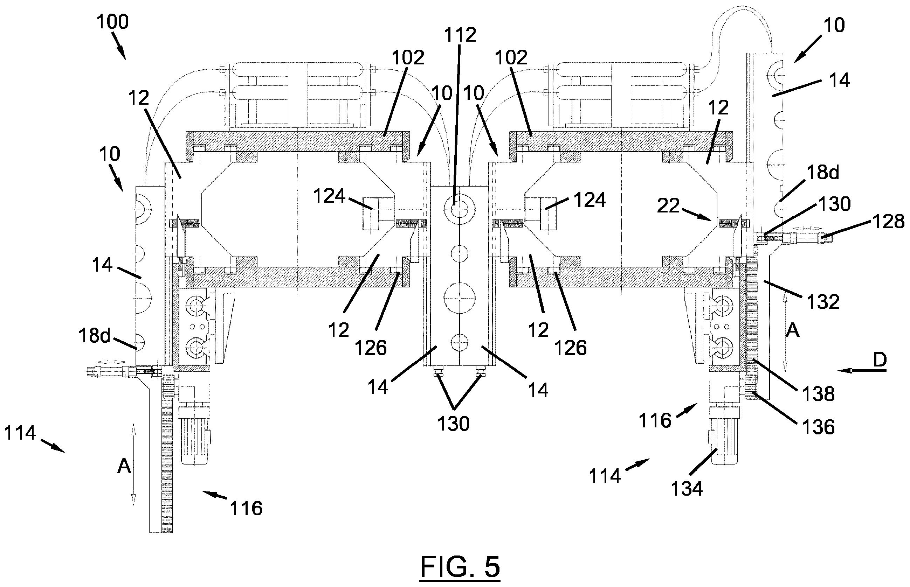

In den Teilen 100a und 100b des Korrugators 100 ist jeweils eine Verstelleinrichtung 114 dargestellt, welche hier aus vier Verstelleinheiten 116 gebildet ist. Jede der vier Verstelleinheiten 116 ist dazu eingerichtet, mit einer Formbackeneinheit 10 bzw. mit einem Formbackenaufsatz 14 einer Formbackeneinheit 10 einzugreifen, um den Formbackenaufsatz 14 relativ zu einem jeweiligen an dem Formbackenträger 102 angebrachten Formbackenbasiselement 12 zu verlagern. In dem in Figur 4 dargestellten Ausführungsbeispiel werden die Formbackenaufsätze 14 relativ zu den Formbackenbasiselementen 12 entlang einer zu der Blattebene vertikalen Achse A verlagert (siehe hierzu auch Figur 1 oder Figur 5).

Die Verstelleinrichtung 114 ist ferner dazu eingerichtet, zusammen mit den Formbackeneinheiten 10 über eine Strecke S verlagert zu werden, um während des Transports der Formbackeneinheiten 10 durch den Formbackenträger 102 eine entsprechende Verstellung der Formbackenaufsätze 14 relativ zu den Formbackenbasiselementen 12 durchführen zu können, ohne dabei die Transportbewegung der Formbackeneinheiten 10 zu beeinflussen. Die Formbackeneinheiten 10, mit welchen die Verstelleinrichtung 114 gerade in Eingriff bringbar ist, können als ein erster Satz 118 von Formbackeneinheiten 10 betrachtet werden, wohingegen Formbackeneinheiten 10, welche nach dem ersten Satz 118 von Formbackeneinheiten 10 mit der Verstelleinrichtung 114 in Eingriff bringbar sind, als ein zweiter Satz 120 von Formbackeneinheiten 10 betrachtet werden können. Nachdem eine entsprechende Verstellung der Formbackenaufsätze 14 durchgeführt worden ist, kann die Verstelleinrichtung 114 in die in Figur 4 dargestellte Ausgangsposition zurück verlagert werden,

Mit der Linie V-V in Figur 4 ist eine Schnittlinie angezeigt, wobei eine entsprechende Schnittansicht in Figur 5 dargestellt ist, welche im Folgenden näher beschrieben werden soll.

In der Mitte der Figur 5 sind zwei gegeneinander anliegende Formbackenaufsätze 14 dargestellt, welche zusammen eine Form 122 bilden, vermittels welcher ein Abschnitt des herzustellenden Wellrohrs 104 ausgebildet werden kann. Zu den in Figur 5 links und rechts dargestellten Seiten der Form 122 verlaufen Pfade 124, welche als Strichpunktlinie dargestellt sind, über welche an die Form 122 ein Unterdruck angelegt werden kann.

Die Formbackenaufsätze 14 der in Figur 5 mittig dargestellten Formbackeneinheiten 10 sind relativ zu ihren jeweiligen Formbackenbasiselementen 12 maximal nach unten verlagert. Die Formbackenbasiselemente 12 der Formbackeneinheiten 10 sind in jeweiligen Formbackenträgern 102 des Korrugators 100 gleitbar gelagert, wie beispielhaft durch die Bezugszeichen 126 angezeigt.

An den linken und rechten äußeren Seiten des in Figur 5 dargestellten Korrugators 100 ist jeweils eine Formbackeneinheit 10 dargestellt, deren Formbackenaufsätze 14 sich relativ zu ihren jeweiligen Formbackenbasiselementen 12 in unterschiedlichen Positionen befinden. So befindet sich der Formbackenaufsatz 14 der in Figur 5 links dargestellten Formbackeneinheit 10 in einer zu den beiden Formbackenaufsätzen 14 der in Figur 5 mittig dargestellten Formbackeneinheiten 10 im Wesentlichen identischen Stellung, wohingegen der Formbackenaufsatz 14 der in Figur 5 rechts dargestellten Formbackeneinheit 10 entlang der Achse A maximal nach oben verschoben ist.

Die Verstelleinrichtungen 114 bzw. die in Figur 5 links und rechts dargestellten Verstelleinheiten 116 werden im Folgenden beispielhaft an der in Figur 5 rechts dargestellten Verstelleinheit 116 beschrieben werden.

Die Verstelleinheit 116 weist eine Eingriffsvorrichtung 128 auf, welche dazu eingerichtet ist, mit einem jeweiligen entsprechenden Eingriffsabschnitt 130 eines Formbackenaufsatzes 14 in Eingriff zu treten, so dass eine gemeinsame Verlagerung eines Schlittens 132 der Verstelleinheit 116, an welchem die Eingriffsvorrichtung 128 angebracht ist, zusammen mit einem jeweiligen Formbackenaufsatz 14 entlang der Achse A ermöglicht ist. Der Schlitten 132 wird hier über eine Antriebseinheit 134 der Verstelleinheit 116 angetrieben, wobei die Antriebseinheit 134 hier ein Zahnrad 136 antreibt, welches wiederum mit einer Verzahnung 138 des Schlittens 132 derart in Eingriff steht, dass eine Rotation des Zahnrads 136 eine Verlagerung des Schlittens 132 entlang der Achse A hervorruft.

Die Verstelleinheit 116 ist ferner dazu eingerichtet, mit einer Rastvorrichtung 22 der Formbackeneinheit 10 zusammenzuwirken, so dass eine relative Verlagerung eines Formbackenaufsatzes 14 relativ zu dem zugeordneten Formbackenbasiselement 12 freigegeben wird.

Alle Antriebseinheiten 134 der Verstelleinrichtungen 114 sind mit einer nicht dargestellten Steuereinheit verbunden, welche dazu eingerichtet ist, entsprechende Steuerbefehle an die Antriebseinheiten 134 zu senden, um jeweilige Schlitten 132 um eine gewünschte Distanz anzutreiben.

Würde auch die in Figur 5 links dargestellte Formbackeneinheit 10 in die Position der in Figur 5 rechts dargestellten Formbackeneinheit verlagert werden, so würden die beiden Formbackenaufsätze 14 so zusammentreffen, dass ihre jeweiligen Formungsflächen 18d Teil der Herstellungskette des Wellrohrs 104 werden, das heißt es würde so ein Abschnitt 106 des Wellrohrs 104 gebildet werden.

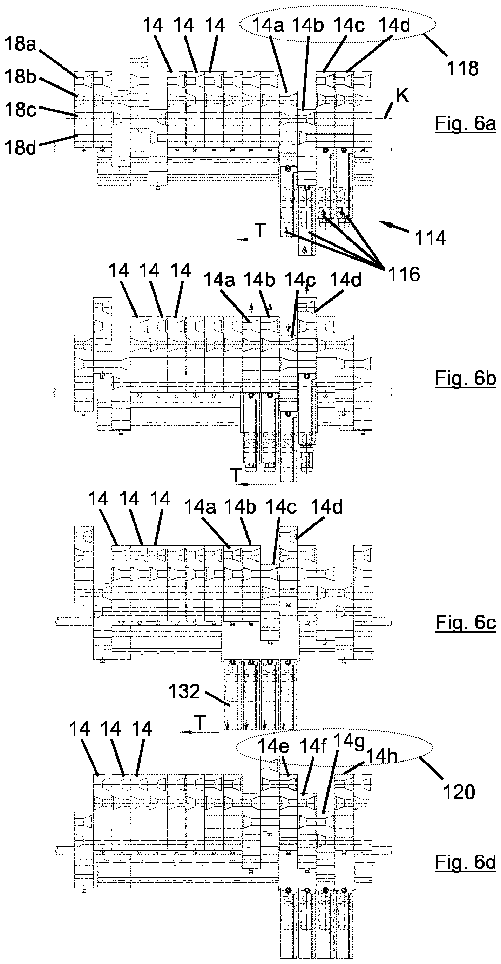

In den Figuren 6a bis 6d sind nun vier Stufen eines Verstellvorgangs dargestellt, wobei die Ansicht der Figuren 6a bis 6d einer Blickrichtung gemäß einem in den Figuren 4 und 5 dargestellten Pfeil D entspricht.

In den Figuren 6a bis 6d ist eine Mehrzahl von Formbackenaufsätzen 14 zu sehen, von welchen in jeder Figur 6a bis 6d lediglich drei beispielhaft mit dem Bezugszeichen 14 versehen sind. Ferner ist eine Strichpunktlinie K dargestellt, welche die oben erwähnte "Kette" oder "Herstellungskette" anzeigt, entlang welcher jeweilige Formungsflächen der Formbackenaufsätze zusammenwirken, um ein Wellrohr 104 herzustellen.

Um den Verlauf der Figuren 6a bis 6d besser erläutern zu können, werden die vier Formbackenaufsätze, mit welchen die Verstelleinheiten 116 in Eingriff sind, (von links nach rechts) als erster Formbackenaufsatz 14a, zweiter Formbackenaufsatz 14b, dritter Formbackenaufsatz 14c und vierter Formbackenaufsatz 14d bezeichnet. Die Formbackenaufsätze 14a bis 14d, welche auch als ein erster Satz 118 von Formbackenaufsätzen 14 bezeichnet werden können, sind in Figur 6a gerade durch jeweilige Verstelleinheiten 116 eingegriffen worden. Wie durch den Pfeil T angezeigt, werden sämtliche Formbackenaufsätze 14 in der Richtung des Pfeils T weiter verlagert.

In Figur 6b ist der erste Satz 118 weiter in der Richtung des Pfeils T verlagert worden (hier um die Breite von zwei Formbackenaufsätzen 14). Entsprechend wurde die Verstelleinrichtung 114 ebenfalls um diese Distanz entlang des Verfahrweges S der Verstelleinrichtung 114 am Korrugator 100 zusammen mit den Formbackenaufsätzen 14a bis 14d verlagert. Ferner wurde der erste Formbackenaufsatz 14a um eine Stufe, in der Darstellung der Figur 6b nach oben, verlagert. Der zweite Formbackenaufsatz 14b wurde durch die entsprechende Verstelleinheit 116 um zwei Stufen nach oben verlagert. Der dritte Formbackenaufsatz 14c wurde um eine Stufe nach unten verlagert. Der vierte Formbackenaufsatz 14d wurde um eine Stufe nach oben verlagert. Gemäß der Anordnung der Formungsflächen 18a bis 18d an den jeweiligen Formbackenaufsätzen 14a bis 14d bilden die in die Herstellungskette K verlagerten Formungsflächen der ersten bis vierten Formbackenaufsätze 14a bis 14d (in dieser Reihenfolge) Abschnitte 110, 110, 112 und 106 eines Wellrohrs 104 aus.

In Figur 6c ist der erste Satz 118 an Formbackenaufsätzen 14a bis 14d um die Breite eines Formbackenaufsatzes 14 weiter in Richtung des Pfeils T verlagert worden. Die Verstelleinheiten 116 der Verstelleinrichtung 114 sind mit den Formbackenaufsätzen 14a bis 14d außer Eingriff getreten und die Schlitten 132 der Verstelleinheiten 116 sind in eine vollständig zurückgefahrene Ausgangsposition verlagert.

In Figur 6d ist nun eine Ausgangsstellung der Verstelleinrichtung 114 dargestellt, wobei die Verstelleinrichtung 114 bzw. deren Verstelleinheiten 116 dazu eingerichtet sind, mit einem zweiten Satz 120 von fünften bis achten Formbackenaufsätzen 14e bis 14h in Eingriff zu treten. Die darauf folgenden Verfahrensschritte wiederholen sich in einer zu dem ersten Satz 118 von Formbackenaufsätzen 14 analogen Weise, entsprechend einer durch die jeweiligen Formungsflächen 18a bis 18d der jeweiligen Formbackenaufsätze 14e bis 14h gewünschten Formgebung des Wellrohrs 104.

## Patentansprüche

1. Korrugator (100), umfassend
eine Mehrzahl von Formbacken, welche wenigstens eine Mehrzahl von Formbackeneinheiten (10) umfasst, wobei jede Formbackeneinheit (10)
einen Formbackenaufsatz (14; 14a-14h), welcher eine Mehrzahl von zueinander unterschiedlichen Formungsflächen (18a-18d) aufweist, wobei die Formungsflächen (18a-18d) dazu geeignet sind, einem zu formenden Material eine vorbestimmte Form zu verleihen, und
ein Formbackenbasiselement (12) umfasst, an welchem der Formbackenaufsatz (14; 14a-14h) angeordnet ist, wobei der Formbackenaufsatz (14; 14a-14h) relativ zu dem Formbackenbasiselement (12) an diesem verlagerbar gelagert ist, und einen Formbackenträger (102), an welchem die Formbackenbasiselemente (12) gehaltert sind,
**dadurch gekennzeichnet, dass** die Mehrzahl von zueinander unterschiedlichen Formungsflächen (18a-18d) wenigstens vier Formungsflächen (18a-18d) aufweist, von welchen eine Formungsfläche (18d) einen ersten Durchmesser (D1) aufweist, eine Formungsfläche (18c) einen zweiten Durchmesser (D2), welcher größer ist als der erste Durchmesser, aufweist, eine Formungsfläche (18b) einen von dem ersten Durchmesser (D1) auf den zweiten Durchmesser (D2) ansteigenden Durchmesser aufweist und eine Formungsfläche (18a) einen von dem zweiten Durchmesser (D2) auf den ersten Durchmesser (D1) abnehmenden Durchmesser aufweist, sodass der Korrugator (100) dazu eingerichtet ist, ein Wellrohr auszubilden, welches einen konstanten Abschnitt (106) mit dem ersten Durchmesser (D1), einen konstanten Abschnitt (110) mit dem zweiten Durchmesser (D2), einen Abschnitt (108) mit einem von dem ersten Durchmesser (D1) zu dem zweiten Durchmesser (D2) zunehmenden Durchmesser und/oder einen Abschnitt (112) mit einem von dem zweiten Durchmesser (D2) zu dem ersten Durchmesser (D1) abnehmenden Durchmesser aufweist.

2. Korrugator (100) nach Anspruch 1,
**dadurch gekennzeichnet, dass** der Formbackenaufsatz (14; 14a-14h) relativ zu dem Formbackenbasiselement (12) entlang genau einer Achse (A) translatorisch oder um genau eine Achse (B) rotatorisch verlagerbar ist.

3. Korrugator (100) nach Anspruch 1 oder 2,
**dadurch gekennzeichnet, dass** die Mehrzahl von Formungsflächen (18a-18d) an dem Formbackenaufsatz (14; 14a-14h) an derselben Fläche (28) angeordnet ist.

4. Korrugator (100) nach Anspruch 3,
**dadurch gekennzeichnet, dass** sich die Fläche (28) zu der Verlagerungsrichtung (A) des Formbackenaufsatzes (14; 14a-14h) relativ zu dem Formbackenbasiselement (12) im Wesentlichen parallel erstreckt.

5. Korrugator (100) nach Anspruch 1 oder 2,
**dadurch gekennzeichnet, dass** der Formbackenaufsatz (14; 14a-14h) einen polygonen Querschnitt aufweist und dass jede der Mehrzahl von Formungsflächen (18a-18d) an einer unterschiedlichen Fläche (30'a-30`d) des polygonen Formbackenaufsatzes (14; 14a-14h) angeordnet ist.

6. Korrugator (100) nach einem der Ansprüche 1 bis 5,
**dadurch gekennzeichnet, dass** der Formbackenträger (102) als eine Kette oder als eine Führungseinrichtung ausgebildet ist.

7. Korrugator (100) nach einem der Ansprüche 1 bis 6,
**dadurch gekennzeichnet, dass** der Formbackenaufsatz (14; 14a-14h) relativ zu dem Formbackenbasiselement (12) im Betriebszustand der Formbackeneinheit (10) entlang einer zu einer Produktionsrichtung (R) des Korrugators (100) im Wesentlichen orthogonalen Richtung (A) verlagerbar oder um eine zu der Produktionsrichtung (R) des Korrugators (100) im Wesentlichen parallele Achse (B) rotierbar ist.

8. Korrugator (100) nach einem der Ansprüche 1 bis 7,
**dadurch gekennzeichnet, dass** der Korrugator (100) eine Verstelleinrichtung (114) umfasst, welche dazu eingerichtet ist, den Formbackenaufsatz (14; 14a-14h) relativ zu dem Formbackenbasiselement (12) um ein vorbestimmtes Ausmaß zu verlagern.

9. Korrugator (100) nach Anspruch 8,
**dadurch gekennzeichnet, dass** die Verstelleinrichtung (114) als wenigstens ein verlagerbarer Anschlag ausgebildet ist, mit welchem ein Abschnitt des Formbackenaufsatzes (14; 14a-14h) in Kontakt tritt, so dass der Formbackenaufsatz (14; 14a-14h) relativ zu dem Formbackenbasiselement entsprechend der voreingestellten Position des Anschlags verlagert wird.

10. Korrugator nach Anspruch 8 oder 9,
**dadurch gekennzeichnet, dass** die Verstelleinrichtung (114) dazu eingerichtet ist, über eine vordefinierte Strecke (S) zusammen mit wenigstens einer zu verstellenden Formbackeneinheit (10) verlagert zu werden.

11. Korrugator nach Anspruch 8 bis 10,
**dadurch gekennzeichnet, dass** die Verstelleinrichtung (114) als eine Mehrzahl von Verstelleinheiten (116) ausgebildet ist, wobei jede Verstelleinheit (116) einem Formbackenaufsatz (14; 14a-14h) zugeordnet ist, und wobei jede Verstelleinheit (116) dazu eingerichtet ist, den Formbackenaufsatz (14; 14a-14h) relativ zu dem Formbackenbasiselement (12) zu verlagern.

12. Korrugator (100) nach einem der Ansprüche 1 bis 11,
**dadurch gekennzeichnet, dass** zwei miteinander eine Form bildende Formbackenaufsätze (14; 14a-14h) mit Vorsprüngen und Ausnehmungen versehen sind, welche dazu eingerichtet sind, miteinander in Eingriff zu treten, wenn die Formbackenaufsätze (14; 14a-14h) betriebsmäßig gegeneinander anliegen.

13. Korrugator (100) nach einem der Ansprüche 1 bis 12,
**dadurch gekennzeichnet, dass** wenigstens zwei, in einer Produktionsrichtung (R) des Korrugators (100) gesehen, nacheinander, insbesondere an dem gleichen Formbackenträger (102), angeordnete Formbackenaufsätze (14; 14a-14h) mit Vorsprüngen und Ausnehmungen versehen sind, welche dazu eingerichtet sind, miteinander in Eingriff zu treten, wenn die Formbackenaufsätze (14; 14a-14h) betriebsmäßig aneinander anliegen.

14. Verfahren zum Verändern einer durch Formungsflächen (18a-18d) definierten Form eines Korrugators (100), wobei das Verfahren die Schritte umfasst:
- Bereitstellen eines Korrugators (100) nach einem der Ansprüche 1 bis 13, umfassend
eine Mehrzahl von Formbacken, welche wenigstens eine Mehrzahl von Formbackeneinheiten (10) umfasst, wobei jede Formbackeneinheit (10)
einen Formbackenaufsatz (14; 14a-14h), welcher eine Mehrzahl von zueinander unterschiedlichen Formungsflächen (18a-18d) aufweist, wobei die Formungsflächen (18a-18d) dazu geeignet sind, einem zu formenden Material eine vorbestimmte Form zu verleihen, und
ein Formbackenbasiselement (12) umfasst, an welchem der Formbackenaufsatz (14; 14a-14h) angeordnet ist, wobei der Formbackenaufsatz (14; 14a-14h) relativ zu dem Formbackenbasiselement (12) an diesem verlagerbar gelagert ist, und
einen Formbackenträger (102), an welchem die Formbackenbasiselemente (12) gehaltert sind
- Antreiben der Formbackenbasiselemente (12), so dass sie sich entlang einer Förderrichtung (C) bewegen,
- Antreiben wenigstens eines Formbackenaufsatzes (14; 14a-14h) während seiner Bewegung in Förderrichtung (C) durch eine Verstelleinrichtung (114) relativ zu dem Formbackbasiselement (12), so dass der Formbackenaufsatz (14; 14a-14h) aus einer ersten Position, welche einer ersten Formungsfläche (18a-18d) zugeordnet ist, in eine zweite Position, welche einer zweiten Formungsfläche (18a-18d) zugeordnet ist, verlagert wird.

## Claims

1. Corrugator (100), comprising
a plurality of mould jaws, which comprises at least a plurality of mould jaw units (10), each mould jaw unit (10)
comprising a mould jaw attachment (14; 14a-14h), which comprises a plurality of shaping surfaces (18a-18d) that are different from one another, the shaping surfaces (18a-18d) being suitable for providing a material to be shaped with a predetermined shape, and
a mould jaw base element (12), on which the mould jaw attachment (14; 14a-14h) is arranged, the mould jaw attachment (14; 14a-14h) being mounted on the mould jaw base element (12) so as to be movable relative thereto, and a mould jaw support (102) on which the mould jaw base elements (12) are held,
**characterised in that** the plurality of shaping surfaces (18a-18d) that are different from one another comprises at least four shaping surfaces (18a-18d), of which one shaping surface (18d) has a first diameter (D1), one shaping surface (18c) has a second diameter (D2) which is larger than the first diameter, one shaping surface (18b) has a diameter that increases from the first diameter (D1) to the second diameter (D2), and a shaping surface (18a) has a diameter that reduces from the second diameter (D2) to the first diameter (D1), such that the corrugator (100) is designed to form a corrugated pipe which has a constant portion (106) having the first diameter (D1), a constant portion (110) having the second diameter (D2), a portion (108) having a diameter that increases from the first diameter (D1) to the second diameter (D2), and/or a portion (112) having a diameter that reduces from the second diameter (D2) to the first diameter (D1).

2. Corrugator (100) according to claim 1,
**characterised in that** the mould jaw attachment (14; 14a-14h) is movable, relative to the mould jaw base element (12), in translation along exactly one axis (A) or in rotation about exactly one axis (B).

3. Corrugator (100) according to either claim 1 or claim 2,
**characterised in that** the plurality of shaping surfaces (18a-18d) on the mould jaw attachment (14; 14a-14h) is arranged on the same surface (28).

4. Corrugator (100) according to claim 3,
**characterised in that** the surface (28) extends substantially in parallel to the movement direction (A) of the mould jaw attachment (14; 14a-14h) relative to the mould jaw base element (12).

5. Corrugator (100) according to either claim 1 or claim 2,
**characterised in that** the mould jaw attachment (14; 14a-14h) has a polygonal cross-section and that each of the plurality of shaping surfaces (18a-18d) is arranged on a different surface (30'a-30'd) of the polygonal mould jaw attachment (14; 14a-14h).

6. Corrugator (100) according to any of claims 1 to 5,
**characterised in that** the mould jaw support (102) is designed as a chain or as a guide means.

7. Corrugator (100) according to any of claims 1 to 6,
**characterised in that** the mould jaw attachment (14; 14a-14h) is movable relative to the mould jaw base element (12), in the operating state of the mould jaw unit (10), along a direction (A) substantially orthogonal to a production direction (R) of the corrugator (100), or is rotatable about an axis (B) substantially in parallel with the production direction (R) of the corrugator (100).

8. Corrugator (100) according to any of claims 1 to 7,
**characterised in that** the corrugator (100) comprises an adjustment device (114) which is designed to move the mould jaw attachment (14; 14a-14h), relative to the mould jaw base element (12), by a predetermined amount.

9. Corrugator (100) according to claim 8,
**characterised in that** the adjustment device (114) is formed as at least one movable stop with which a portion of the mould jaw attachment (14; 14a-14h) comes into contact, such that the mould jaw attachment (14; 14a-14h) is moved relative to the mould jaw base element according to the preset position of the stop.

10. Corrugator according to either claim 8 or claim 9,
**characterised in that** the adjustment device (114) is designed to be moved, together with at least one mould jaw unit (10) to be adjusted, over a predefined distance (S).

11. Corrugator according to claims 8 to 10,
**characterised in that** the adjustment device (114) is designed as a plurality of adjustment units (116), each adjustment unit (116) being associated with a mould jaw attachment (14; 14a-14h), and each adjustment unit (116) being designed to move the mould jaw attachment (14; 14a-14h) relative to the mould jaw base element (12).

12. Corrugator (100) according to any of claims 1 to 11,
**characterised in that** two mould jaw attachments (14; 14a-14h) that together form a mould are provided with projections and recesses which are designed to come into engagement with one another when the mould jaw attachments (14; 14a-14h) rest against one another during normal operation.

13. Corrugator (100) according to any of claims 1 to 12,
**characterised in that** at least two mould jaw attachments (14; 14a-14h) that are arranged in succession, viewed in the production direction (R) of the corrugator (100), in particular on the same mould jaw support (102), are provided with projections and recesses which are designed to come into engagement with one another when the mould jaw attachments (14; 14a-14h) rest against one another during normal operation.

14. Method for changing a shape of a corrugator (100) defined by shaping surfaces (18a-18d), wherein the method comprises the steps of:
- providing a corrugator (100) according to any of claims 1 to 13, comprising
a plurality of mould jaws, which comprises at least a plurality of mould jaw units (10), each mould jaw unit (10)
comprising a mould jaw attachment (14; 14a-14h), which comprises a plurality of shaping surfaces (18a-18d) that are different from one another, the shaping surfaces (18a-18d) being suitable for providing a material to be shaped with a predetermined shape, and
comprising a mould jaw base element (12), on which the mould jaw attachment (14; 14a-14h) is arranged, the mould jaw attachment (14; 14a-14h) being mounted on the mould jaw base element (12) so as to be movable relative thereto, and
a mould jaw support (102) on which the mould jaw base elements (12) are held,
- driving the mould jaw base elements (12) such that they move along a conveying direction (C),
- driving at least one mould jaw attachment (14; 14a-14h) during its movement in the conveying direction (C) by an adjustment device (114) relative to the mould jaw base element (12), such that the mould jaw attachment (14; 14a-14h) is moved out of a first position, which is associated with a first shaping surface (18a-18d), into a second position, which is associated with a second shaping surface (18a-18d).

## Revendications

1. Machine à onduler (100) comprenant
une pluralité de mâchoires de formage comprenant au moins une pluralité d'unités de mâchoire de formage (10), chaque unité de mâchoire de formage (10) présentant
une garniture de mâchoire de formage (14 ; 14a-14h) qui comprend une pluralité de surfaces de formage (18a-18d) différentes les unes des autres, les surfaces de formage (18a-18d) étant adaptées pour donner une forme prédéterminée à un matériau à former, et
un élément de base de mâchoire de formage (12) sur lequel est disposée la garniture de mâchoire de formage (14 ; 14a-14h), la garniture de mâchoire de formage (14 ; 14a-14h) étant montée sur l'élément de base de mâchoire de formage (12) de manière à pouvoir être déplacée par rapport à celui-ci, et
un support de mâchoire de formage (102), sur lequel les éléments de base de mâchoire de formage (12) sont retenus,
**caractérisée en ce que**
la pluralité de surfaces de formage (18a-18d) différentes les unes des autres comprend au moins quatre surfaces de formage (18a-18d), dont une surface de formage (18d) présente un premier diamètre (D1), une surface de formage (18c) présente un deuxième diamètre (D2) plus grand que le premier diamètre, une surface de formage (18b) présente un diamètre croissant pour passer du premier diamètre (D1) au deuxième diamètre (D2), et dont une surface de formage (18a) présente un diamètre décroissant pour passer du deuxième diamètre (D2) au premier diamètre (D1), de sorte que la machine à onduler (100) est conçue pour réaliser un tube ondulé ayant un tronçon constant (106) avec le premier diamètre (D1), un tronçon constant (110) avec le deuxième diamètre (D2), un tronçon (108) avec un diamètre croissant pour passer du premier diamètre (D1) au deuxième diamètre (D2) et/ou un tronçon (112) avec un diamètre décroissant pour passer du deuxième diamètre (D2) au premier diamètre (D1).

2. Machine à onduler (100) selon la revendication 1,
**caractérisée en ce que** la garniture de mâchoire de formage (14 ; 14a-14h) peut être déplacée en translation le long d'exactement un axe (A) ou en rotation autour d'exactement un axe (B) par rapport à l'élément de base de mâchoire de formage (12).

3. Machine à onduler (100) selon la revendication 1 ou 2,
**caractérisée en ce que** la pluralité de surfaces de formage (18a-18d) sur la garniture de mâchoire de formage (14 ; 14a-14h) est disposée sur la même surface (28).

4. Machine à onduler (100) selon la revendication 3,
**caractérisée en ce que** la surface (28) s'étend sensiblement parallèlement à la direction de déplacement (A) de la garniture de mâchoire de formage (14 ; 14a-14h) par rapport à l'élément de base de mâchoire de formage (12).

5. Machine à onduler (100) selon la revendication 1 ou 2,
**caractérisée en ce que** la garniture de mâchoire de formage (14 ; 14a-14h) présente une section transversale polygonale, et
**en ce que** chacune de la pluralité de surfaces de formage (18a-18d) est disposée sur une surface différente (30'a- 30'd) de la garniture de mâchoire de formage (14 ; 14a-14h) polygonale.

6. Machine à onduler (100) selon l'une des revendications 1 à 5,
**caractérisée en ce que** le support de mâchoire de formage (102) est réalisé sous la forme d'une chaîne ou d'un dispositif de guidage.

7. Machine à onduler (100) selon l'une des revendications 1 à 6,
**caractérisée en ce que** dans l'état de fonctionnement de l'unité de mâchoire de formage (10), le support de mâchoire de formage (14 ; 14a-14h) peut être déplacé par rapport à l'élément de base de mâchoire de formage (12), le long d'une direction (A) sensiblement orthogonale à une direction de production (R) de la machine à onduler (100), ou peut être mis en rotation autour d'un axe (B) sensiblement parallèle à la direction de production (R) de la machine à onduler (100).

8. Machine à onduler (100) selon l'une des revendications 1 à 7,
**caractérisée en ce que** la machine à onduler (100) comprend un dispositif de déplacement (114) conçu pour déplacer la garniture de mâchoire de formage (14 ; 14a-14h) par rapport à l'élément de base de mâchoire de formage (12) d'une valeur prédéterminée.

9. Machine à onduler (100) selon la revendication 8,
**caractérisée en ce que** le dispositif de déplacement (114) est réalisé sous la forme d'au moins une butée déplaçable avec laquelle une partie de la garniture de mâchoire de formage (14 ; 14a-14h) entre en contact, de sorte que la garniture de mâchoire de formage (14 ; 14a-14h) est déplacée par rapport à l'élément de base de mâchoire de formage en fonction de la position préréglée de la butée.

10. Machine à onduler selon la revendication 8 ou 9,
**caractérisée en ce que** le dispositif de déplacement (114) est conçu pour être déplacé sur un trajet prédéfini (S) ensemble avec au moins une unité de mâchoire de formage (10) à déplacer.

11. Machine à onduler selon les revendications 8 à 10,
**caractérisée en ce que** le dispositif de déplacement (114) est réalisé sous la forme d'une pluralité d'unités de déplacement (116), chaque unité de déplacement (116) étant associée à une garniture de mâchoire de formage (14 ; 14a-14h), et chaque unité de déplacement (116) étant conçue pour déplacer la garniture de mâchoire de formage (14 ; 14a-14h) par rapport à l'élément de base de mâchoire de formage (12).

12. Machine à onduler (100) selon l'une des revendications 1 à 11,
**caractérisée en ce que** deux garnitures de mâchoire de formage (14 ; 14a-14h) constituant un moule l'une avec l'autre sont pourvues de saillies et d'évidements qui sont conçus pour venir en prise les uns avec les autres lorsque les garnitures de mâchoire de formage (14 ; 14a-14h) sont en appui les unes contre les autres en fonctionnement.

13. Machine à onduler (100) selon l'une des revendications 1 à 12,
**caractérisée en ce qu'**au moins deux garnitures de mâchoire de formage (14 ; 14a-14h) disposées l'une derrière l'autre, vues dans une direction de production (R) de la machine à onduler (100), et disposées en particulier sur le même support de mâchoire de formage (102), sont pourvues de saillies et d'évidements conçus pour venir en prise les uns avec les autres lorsque les garnitures de mâchoire de formage (14 ; 14a-14h) sont en appui les unes contre les autres en fonctionnement.

14. Procédé de modification de la forme d'une machine à onduler (100) définie par des surfaces de formage (18a-18d), le procédé comprenant les étapes consistant à :
- fournir une machine à onduler (100) selon l'une des revendications 1 à 13, comprenant
une pluralité de mâchoires de formage comprenant au moins une pluralité d'unités de mâchoire de formage (10), chaque unité de mâchoire de formage (10) comprenant
une garniture de mâchoire de formage (14 ; 14a-14h) présentant une pluralité de surfaces de formage (18a-18d) différentes les unes des autres, les surfaces de formage (18a-18d) étant adaptées pour donner une forme prédéterminée à un matériau à former, et
un élément de base de mâchoire de formage (12) sur lequel est disposée la garniture de mâchoire de formage (14 ; 14a-14h), la garniture de mâchoire de formage (14 ; 14a-14h) étant montée sur l'élément de base de mâchoire de formage (12) de manière à pouvoir être déplacée par rapport à celui-ci, et
un support de mâchoire de formage (102) sur lequel les éléments de base de mâchoire de formage (12) sont retenus,
- entraîner les éléments de base de mâchoire de formage (12) de sorte qu'ils se déplacent le long d'une direction de transport (C),
- entraîner au moins une garniture de mâchoire de formage (14 ; 14a-14h), pendant son déplacement dans la direction de transport (C), par un dispositif de déplacement (114) par rapport à l'élément de base de mâchoire de formage (12), de sorte que la garniture de mâchoire de formage (14 ; 14a-14h) est déplacée d'une première position associée à une première surface de formage (18a-18d) à une deuxième position associée à une deuxième surface de formage (18a-18d).
